(19) **Europäisches Patentamt**

**European Patent Office**

**Office européen des brevets**

(11) **EP 0 703 567 B1**

(12) **EUROPÄISCHE PATENTSCHRIFT**

(45) Veröffentlichungstag und Bekanntmachung des Hinweises auf die Patenterteilung:
**21.06.2000 Patentblatt 2000/25**

(51) Int Cl.$^7$: **G10L 15/12**

(21) Anmeldenummer: **95113823.9**

(22) Anmeldetag: **02.09.1995**

(54) **Verfahren und Einrichtung zur Bestimmung eines Masses der Übereinstimmung zwischen zwei Mustern sowie Spracherkennungseinrichtung damit und Programmmodul dafür**

Process and apparatus for determining the degree of matching of two structures, as well as apparatus to recognize the speech and programme modul for that

Procédé et dispositif de détermination du degré de concordance de deux structures, dispositif de reconnaissance de parole utilisant celui-ci et module de programme pour celui-ci

(84) Benannte Vertragsstaaten:
**AT BE CH DE ES FR GB IT LI NL SE**

(30) Priorität: **20.09.1994 DE 4433366**

(43) Veröffentlichungstag der Anmeldung:
**27.03.1996 Patentblatt 1996/13**

(73) Patentinhaber: **ALCATEL**
**75008 Paris (FR)**

(72) Erfinder:
• **Kopp, Dieter**
**D-71282 Hemmingen (DE)**
• **Rozinaj, Gregor**
**D-70191 Stuttgart (DE)**
• **Thierer, Gebhard**
**D-71254 Ditzingen (DE)**

(74) Vertreter: **Brose, Gerhard, Dipl.-Ing. et al**
**Alcatel**
**Intellectual Property Department, Stuttgart**
**Postfach 30 09 29**
**70449 Stuttgart (DE)**

(56) Entgegenhaltungen:
**EP-A- 0 285 211          EP-A- 0 399 452**
**EP-A- 0 614 172**

## Beschreibung

Die Erfindung betrifft ein Verfahren und eine Einrichtung zur Bestimmung eines Maßes der Übereinstimmung zwischen zwei Mustern nach dem Oberbegriff von Anspruch 1 bzw. von Anspruch 10, eine Spracherkennungseinrichtung nach dem Oberbegriff von Anspruch 11 und ein Programm-Modul nach dem Oberbegriff von Anspruch 12.

Ein solches Verfahren wird beispielsweise in dem Kapitel "7.4.2. Nichtlineare Zeitanpassung bei vorgegebenem Anfangs- und Endpunkt" des Buches "Sprachverarbeitung" von E. Eppinger und E. Herter, Carl Hanser Verlag, 1993, Seite 160 bis Seite 167 beschrieben.

Das in diesem Kapitel beschriebene Verfahren wird für die Einzelworterkennung verwendet und dient der Zeitanpassung sowie der Berechnung eines zeitnormierten Abstandes zwischen zwei Wort-Mustern. Beide Wort-Muster werden hierfür in kleine Zeitsegmente zerlegt, die jeweils durch einen Vektor beschrieben werden. Man erhält so zwei Folgen von Vektoren, beispielsweise eine Folge von n Vektoren für das erste und eine Folge von m Vektoren für das zweite Wort-Muster.

Für jeden Vektor der einen mit jedem Vektor der anderen Folge wird dann der Abstand zwischen den Vektoren berechnet. Man erhält so eine Matrix mit n x m Abstandswerten. Mittels eines Algorithmus, der dem Konzept der Dynamischen Programmierung (DP-Algorithmus; in der oben angeführten Quelle beschrieben) entspricht, wird sodann von dem Punkt {1, 1} der Matrix beginnend für jeden Punkt der Matrix ein sogenannter mittlere Abstand entlang eines optimalen Weges berechnet. Der mittlere Abstand im Punkt {n, m} gibt sodann als Ergebnis den zeitnormalisierten Abstand zwischen den beiden Wort-Mustern an. Der zugehörige optimale Weg gibt die Abbildungsfunktion für die Zeitanpassung wieder.

Ein Nachteil dieses Verfahrens ist, daß es einen hohen Rechenaufwand erfordert, da n x m Abstandsberechnungen und Iterationsschritte des DP-Algorithmus durchzuführen sind.

In dem Artikel "Minimum prediction residual principle applied to speech recognition" von F. Itakara, IEEE Trans on ASSP, Vol. ASSP-23, 1975, Seite 67 bis Seite 72, wird weiter beschrieben, daß bei einem solchen Verfahren die Berechnungen nicht für alle Punkte der Matrix ausgeführt werden müssen, sondern daß die Berechnungen auf einen paralellogrammförmigen Bereich um die Diagonale zwischen den Punkten {1; 1} und {n; m} beschränkt werden können.

Bei solch einer Beschränkung verschlechtert sich jedoch die Güte der Mustererkennung, wenn der Anfang oder der Endpunkt eines Einzelwortes nicht genau synchronisiert sind.

Die Aufgabe der Erfindung ist es nun, den für die Abarbeitung eines solchen Verfahrens benötigten Rechenaufwand zu reduzieren.

Die Aufgabe wird gelöst durch ein Verfahren nach der Lehre von Anspruch 1, durch eine Einrichtung nach der Lehre von Anspruch 10, durch eine Spracherkennungseinrichtung nach der Lehre von Anspruch 11 und durch ein Programm-Modul nach der Lehre von Anspruch 12.

Die Erfindung baut auf der Erkenntnis auf, daß der einem Punkt zugeordnete optimale Weg bestimmten Steigungsbedingungen zu entsprechen hat. Die Grundidee der Erfindung ist dabei, daß während der Berechnung der Bereich der Matrix, für den die Berechnungen durchgeführt werden, dynamisch weiter eingeschränkt werden kann, wenn für Randpunkte Daten über die Steigung des diesen Punkten zugeordneten optimalen Weges bekannt sind. Als nachfolgende Randpunkte kommen hier nur noch Punkte in Frage, die diesen Steigungsbedingungen entsprechen.

Ein Vorteil der Erfindung ist, daß der Bereich der Matrix, für den Berechnungen auszuführen sind, nicht für alle Muster starr festgelegt ist, sondern sich dynamisch an die zu vergleichenden Muster anpaßt. Es sind so weniger Rechenschritte auszuführen, die Mustererkennung wird damit schneller.

Weitere vorteilhafte Ausgestaltungen der Erfindung sind den Unteransprüchen zu entnehmen.

Insbesondere wird vorgeschlagen, den Bereich, für den Berechnungen durchzuführen sind, zu Beginn auf einen fünfeckig begrenzten Bereich zu beschränken. Dies hat den Vorteil, daß auch bei schlecht synchronisierten Anfangs- und Endpunkten noch gute Ergebnisse zu erwarten sind.

Im folgenden wird nun die Erfindung anhand eines Ausführungsbeispiels unter Zuhilfenahme beiliegender Zeichnungen weiter erläutert.

Fig. 1   zeigt ein Blockschaltbild einer erfindungsgemäßen Spracherkennungseinrichtung mit einer erfindungsgemäßen Einrichtung zur Bestimmung des Maßes der Übereinstimmung zwischen zwei Mustern.

Fig. 2   zeigt ein Blockschaltbild der erfindungsgemäßen Einrichtung nach Fig. 1.

Fig. 3   zeigt eine symbolische Darstellung einer Matrix und mehrere einen Bereich der Matrix begrenzende Linien.

Fig. 4   zeigt ein Flußdiagramm, das den Ablauf in der Einrichtung nach Fig. 1 und 2 verdeutlicht.

Im Ausführungsbeispiel wird nun die Anwendung des erfindungsgemäßen Verfahrens in einer erfindungsgemäßen Spracherkennungseinrichtung erläutert, die eine erfindungsgemäße Einrichtung enthält.

Es ist jedoch auch möglich das erfindungsgemäße Verfahren oder die erfindungsgemäße Einrichtung für die Erkennung von Mustern einzusetzen, die nicht Sprach-Muster sind. Solche Muster können beispielsweise Bildern oder Bewegtbildern entsprechende Muster sein.

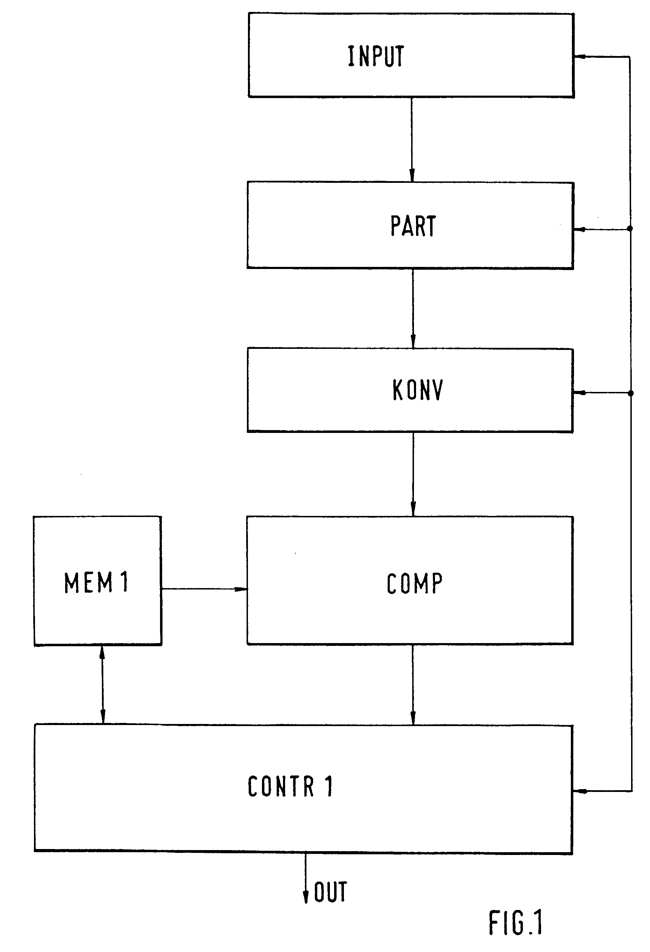

Fig. 1 zeigt eine Eingabeeinrichtung INPUT, eine Trenneinrichtung PART, eine Konvertiereinrichtung KONV, eine Einrichtung COMP, eine Speichereinrichtung MEM1 und eine Steuereinrichtung CONTR1. Die Steuereinrichtung CONTR1 tauscht mit der Speichereinrichtung MEM1, der Einrichtung COMP, der Konvertiereinrichtung KONV, der Trenneinrichtung PART und der Eingabeeinrichtung INPUT Steuerbefehle aus. Die Trenneinrichtung PART empfängt von der Eingabeeinrichtung INPUT Daten und sendet an die Konvertiereinrichtung KONV Daten. Die Einrichtung COMP empfängt von der Konvertiereinrichtung KONV und von der Speichereinrichtung MEM1 Daten und sendet an die Steuereinrichtung CONTR1 Daten. Die Steuereinrichtung CONTR1 stellt ein Ausgangssignal OUT zur Verfügung.

Die Eingabeeinrichtung INPUT verfügt über Mittel zum Empfang von akustischen Signalen, wandelt diese Signale in analoge elektrische Signale um und führt sodann eine Umwandlung in digitale elektrische Signale durch. Diese Signale, die einem digitalen Sprach-Muster entsprechen, sendet sie an die Trenneinrichtung PART.

Die Trenneinrichtung PART verfügt über eine Anfangs- und Endeerkennungseinrichtung, mittels der sie das von der Eingabeeinrichtung INPUT empfangene digitale Sprach-Muster in Wort-Muster zerlegt, die Einzelworten entsprechen. Diese Wort-Muster sendet sie sodann an die Konvertiereinrichtung KONV.

Die Konvertiereinrichtung KONV zerlegt das einem Einzelwort entsprechende Wort-Muster in eine Vielzahl von kurzen Segmenten gleicher Dauer. Solch ein Segment hat hierbei beispielsweise eine Dauer von 10 ms. Für jedes Segment berechnet sie einen Merkmalsvektor, der die akustischen Ereignisse in dem jeweiligen Segment beschreibt und aus mehreren Sprachparametern bestehen kann. Solche Sprachparameter können beispielsweise spektrale Energien, LPC-Koeffizienten, Cepstrum-Koeffizienten oder vergleichbares sein. Die genaue Bedeutung dieser Koeffizienten ist nicht erfindungswesentlich und es wird so hier nicht näher auf sie eingegangen. Hier wird ein Merkmalsvektor durch 10 LPC-Koeffizienten beschrieben. Die Konvertiereinrichtung KONV bildet so das Wort-Muster eines Einzelwortes auf eine Vielzahl von Merkmalsvektoren ab, die sie sodann an die Einrichtung COMP sendet.

Die Speichereinrichtung MEM1 wird von einer Datenbank gebildet, in der eine Vielzahl von Referenzmustern abgelegt ist. Jedes Referenzmuster stellt hierbei ein Einzelwort dar und wird ebenfalls von einer Vielzahl von Merkmalsvektoren beschrieben.

Es ist auch möglich, daß in der Speichereinrichtung MEM1 eine Vielzahl von digitalen Wort-Mustern abgespeichert sind, die von einer der Konvertiereinrichtung KONV ansprechenden Einrichtung auf Folgen von Merkmalsvektoren abgebildet werden, wenn sie an die Einrichtung COMP zu senden sind.

Die Einrichtung COMP berechnet den zeitnormierten Abstand zwischen einem Referenzmuster, das sie von der Spreichereinrichtung MEM1 empfängt und dem Wort-Muster, das sie von der Konvertiereinrichtung KONV empfängt. Sie erhält hierbei beide Muster in einer Beschreibung mit Merkmalsvektoren.

Die Steuereinrichtung CONTR1 steuert den Ablauf in der Worterkennungseinrichtung. Sie steuert die Speichereinrichtung MEM1 so an, das diese nacheinander die in ihr abgelegten Referenzmuster an die Einrichtung COMP sendet. Von der Einrichtung COMP erhält sie sodann den normierten mittleren Abstand zwischen dem jeweiligen Referenzmuster und dem Wort-Muster. Mit diesen Daten entscheidet sie sodann, welchem Referenzwort das Einzelwort am ehesten entspricht und sendet ein entsprechendes Steuersignal OUT, das dieses Referenzwort angibt. Sie entscheidet sich hierbei für dasjenige Referenzwort, für das sie den kleinsten normierten mittleren Abstand von der Einrichtung COMP empfangen hat.

Es sind auch noch andere Entscheidungskriterien möglich, beispielsweise der Vergleich des normierten mittleren Abstandes mit Schwellen.

Ein Sprach-Muster wird so von der Eingabeeinrichtung INPUT empfangen und von der Trenneinrichtung PART in Wort-Muster zerlegt. Diese Wort-Muster werden sodann nacheinander von der Konvertiereinrichtung KONV jeweils auf eine Folge von Merkmalsvektoren abgebildet. Jede solche Folge von Merkmalsvektoren wird sodann in der Einrichtung COMP mit einer Vielzahl von Referenzmustern entsprechenden Folgen von Merkmalsvektoren verglichen und die Steuereinrichtung CONTR1 entscheidet anhand des jeweiligen normierten Abstandes, welches Referenzmuster dem Wort-Muster am ähnlichsten ist.

Es ist auch möglich, daß die Worterkennungseinrichtung anders aufgebaut ist. Insbesondere ist es auch möglich, daß in einer solchen Einrichtung als zusätzliche Entscheidungshilfe noch andere Einrichtungen, beispielsweise mittels neuronaler Netze zum Einsatz kommen. Es ist beispielsweise auch möglich Referenzmuster, die mit mehr als doppelt oder weniger als halb so viel Merkmalsvektoren wie das Wortmuster beschrieben sind, von vornherein als unpassend auszusondern. Dies wird im folgenden unterstellt. Es ist weiter möglich, auf die Zerlegung in Einzelworte, also auf die Trenneinrichtung PART, zu verzichten und mittels der Mustererkennungseinrichtung den Abstand zwischen Wortfolgen zu berechnen.

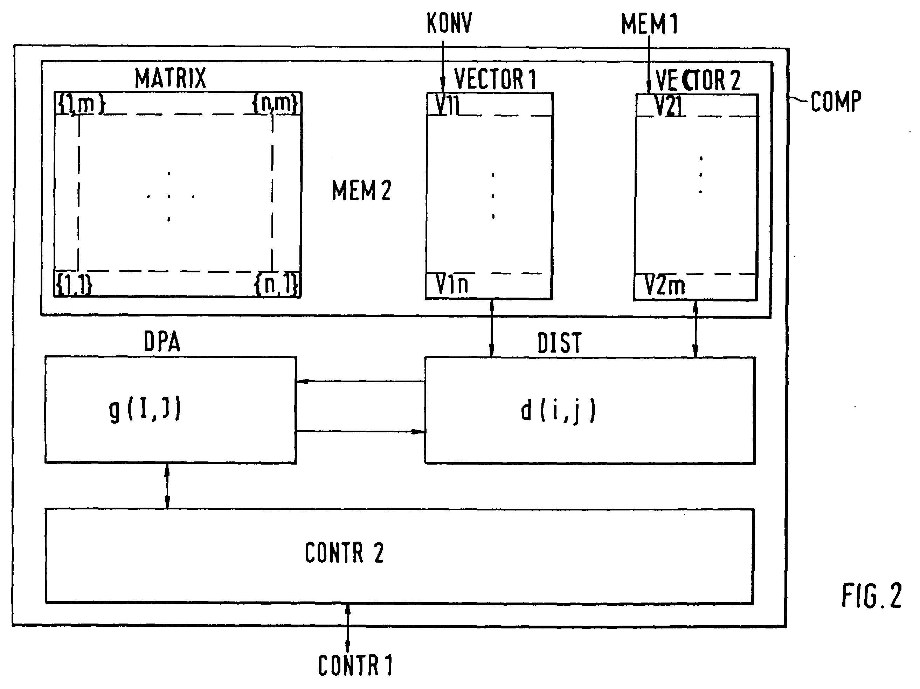

Der genaue Aufbau der Einrichtung COMP wird nun anhand von Fig. 2 verdeutlicht.

Fig. 2 zeigt die Einrichtung COMP. Sie weist eine Speichereinrichtung MEM2, zwei Berechnungs-Einrichtungen DPA und DIST und eine Steuereinrichtung CONTR2 auf.

Die Speichereinrichtung MEM2 empfängt Daten von der Konvertiereinrichtung KONV und von der Speichereinrichtung MEM1 und tauscht Daten mit den Berechnungseinrichtungen DPA und DIST aus. Die Berechnungseinrichtung DPA tauscht Daten mit der Berechnungseinrichtung DIST und mit der Steuereinrichtung CONTR2 aus. Die Steuereinrichtung CONTR2 tauscht Daten mit der Steuereinrichtung CONTR1 aus.

Die Speichereinrichtung MEM2 enthält drei Datensätze MATRIX, VECTOR1 und VECTOR2.

Der Datensatz VECTOR1 enthält eine Folge von beispielsweise n Merkmalsvektoren V11 bis V1n. Dieser Datensatz beschreibt das Wort-Muster und wird von der Konvertiereinrichtung KONV an die Speichereinrichtung MEM2 gesendet und in dieser abgespeichert.

Der Datensatz VECTOR2 enthält ebenfalls eine Folge von Merkmalsvektoren, beispielsweise von m Merkmalsvektoren V21 bis V2m. Er beschreibt das Referenzmuster und wird von der Speichereinrichtung MEM1 an die Speichereinrichtung MEM2 gesendet und in dieser abgespeichert.

Der Datensatz MATRIX enthält n x m Speicherplätze. Jeder Speicherplatz ist einem Punkt einer Matrix zugeordnet, der so diesen Speicherplatz addressiert. Damit werden durch n x m Punkte {1; 1} bis {n; m} die n x m Speicherplätze addressiert.

Es ist auch möglich, daß die Speicherplatzzuweisung in der Speichereinrichtung MEM2 dynamisch erfolgt und so für den Datensatz MATRIX nur so viele der n x m Speicherplätze bereitgestellt werden, wie auch benötigt werden. Dies ist insbesonders dann von Vorteil, wenn nur für einen Teil der Matrix Berechnungen durchgeführt werden und so nur für diesen Teil Werte in dem Datensatz MATRIX abzuspeichern sind.

Die Berechnungseinrichtung DIST berechnet den Abstand zwischen einem Merkmalsvektor aus dem Datensatz VECTOR1 und einem Merkmalsvektor aus dem Datensatz VECTOR2. Die Berechnungseinrichtung DPA sendet an sie die Aufforderung, den Abstand zwischen zwei Merkmalsvektoren, hier beispielsweise zwischen dem i-ten Merkmalsvektor V1i des Datensatzes VECTOR1 und dem j-ten Merkmalsvektor V2j des Datensatzes VECTOR2 zu berechnen. Die Berechnungs-Einrichtung DIST liest sodann diese beiden Vektoren aus der Speichereinrichtung MEM2 aus und berechnet den Abstand nach der Berechnungsformel:

$$d(i,j) = \sum_{k=0}^{9} \left( LPC_k^A(i) - LPC_k^B(j) \right)^2 \qquad (1)$$

wobei $LPC_K^A(i)$ den k-ten LPC-Koeffizienten des Merkmalsvektors V1i und $LPC_K^B(i)$ den k-ten LPC-Koeffizienten des Merkmalsvektors V2j darstellt. Das Ergebnis dieser Abstandsberechnung wird sodann an die Berechnungseinrichtung DPA gesendet.

Es ist auch möglich, daß andere Abstandsmaße, beispielsweise die Absolutbetragsnorm, für die Berechnung des Abstands zwischen den Merkmalsvektoren verwendet werden. Das verwendete Abstandsmaß hängt hierbei insbesondere von der Art der für die Merkmalsvektoren verwendeten Sprachparameter ab.

Die Berechnungseinrichtung DPA berechnet den gewichteten Mittelwert der Abstände entlang eines optimalen Pfades zu einem Punkt in der von den n Merkmalsvektoren V11 bis V1n des Datensatzes VECTOR1 und den m Merkmalsvektoren V21 bis V2m des Datensatzes VECTOR2 aufgespannten Matrix. Die Berechnung erfolgt hierbei mittels eines Algorithmus, der dem Konzept der Dynamischen Programmierung (DP-Algorithmus) entspricht. Eine genaue Beschreibung dieses Konzepts wird in dem schon genannten Kapitel "7.4.2. Nichtlineare Zeitanpassung bei vorgegebenem Anfangs- und Endpunkt" des Buches "Sprachverarbeitung" von E. Eppinger und E. Herter, Carl Hanser Verlag, 1993, Seite 160 bis Seite 167, gegeben.

Die gewichteten Mittelwerte werden vom Punkt {1, 1} beginnend stufenweise berechnet. Die Berechnungseinrichtung DPA führt dabei für die Berechnung des gewichteten Mittelwertes in dem Punkt {I, J} folgende Berechnungsvorschrift durch:

$$g(I,J) = \min \begin{cases} g(I, J-1) + d(I,J) \\ g(I-1, J-1) + 2d(I,J) \\ g(I-1, J) + d(I,J) \end{cases} \qquad (2)$$

Die für diese Berechnungsvorschrift benötigten Werte werden entweder aus dem Datensatz MATRIX ausgelesen oder von der Berechnungs-Einrichtung DIST angefordert. Das Ergebnis der Berechnung wird sodann an dem durch den Punkt {I, J} addressierten Speicherplatz in dem Datensatz MATRIX abgespeichert.

Es ist auch möglich, daß die Berechnungs-Einrichtung DPA eine andere Berechnungsvorschrift ausführt. Dies ist insbesondere dann möglich, wenn keine oder eine andere Wichtungsfunktion verwendet wird. Wenn keine Wichtungsfunktion verwendet wird, ergibt sich für die mittlere Zeile der Berechnungsvorschrift folgende Änderung:

$$g (I-1, J-1) + d (I, J) \qquad\qquad (3)$$

Desweiteren speichert die Berechnungseinrichtung DPA, wenn sie den gewichteten Mittelwert für einen der Punkte {1, 1} bis {n, m} berechnet, Daten über die Steigung des zugeordneten optimalen Weges ab. Ist der Punkt vom vorhergehenden Punkt auf horizontalem Weg (dritte Zeile der Berechnungsvorschrift (2)) oder auf vertikalem Weg (erste Zeile der Berechnungsvorschrift (2)) erreicht worden, so wird ein Minus-Zeichen vor den Wert des in diesem Punkt abgespeicherten gewichteten Mittelwerts gesetzt. Im diagonalen Fall (Zeile zwei der Berechnungsvorschrift (2)) wird der gewichtete Mittelwert nicht verändert.

Es ist auch möglich, daß auch andere oder zusätzliche Daten über die Steigung des optimalen Weges bei einem Punkt vermerkt werden oder daß solche Daten auf andere Weise vermerkt werden. Beispielsweise ist es möglich, die mittlere Steigung über den gesamten optimalen Weg oder einen Teil des optimalen Weges zu vermerken. Die Steigung kann dann beispielsweise in Form eines Zahlenwertes bei dem jeweiligen Punkt vermerkt werden.

Mittels des Vermerks der Steigung des optimalen Weges in einem Punkt ist es weiter möglich, die Wegewahl in einem Punkt weiter einzuschränken. So wurde als Steigungsbedingung ermittelt, daß der optimale Weg nach einem horizontalen oder vertikalen Wegeabschnitt, zunächst diagonal weitergehen muß. Aufgrund dieser Bedingungen könnte die Berechnungsvorschrift (2) derart abgeändert werden, daß sie nur dann Berechnungen für einen Punkt durchführt, dessen Wert einen mit einem Minus-Zeichen versehenen gewichteten Mittelwert enthält, wenn er diagonal (zweite Spalte der Berechnungsvorschrift (2)) zu dem Punkt liegt.

Die Steuereinrichtung CONTR2 gibt der Berechnungs-Einrichtung DPA vor, welche und in welcher Reihenfolge gewichtete Mittelwerte zu berechnen sind. Hierbei veranlaßt sie, daß die Berechnung spaltenweise, beginnend vom Punkt {1, 1} durchgeführt wird und die gewichteten Mittelwerte nicht für alle Punkte {1, 1} bis {n, m} der Matrix berechnet werden, sondern daß diese Berechnungen nur für einen Teilbereich der Matrix erfolgen.

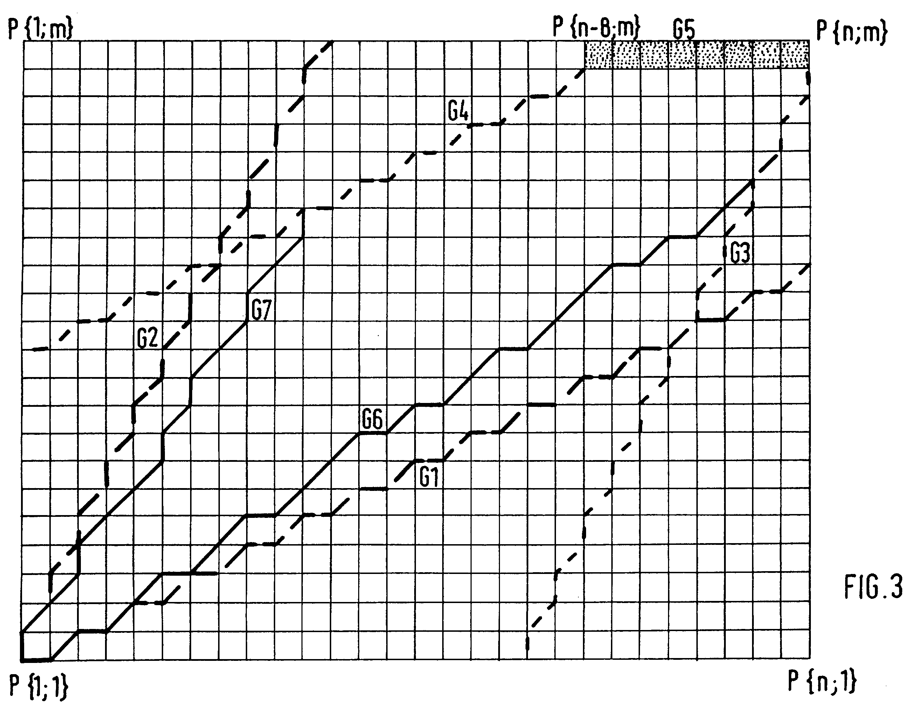

Der Bereich, in dem die Berechnungen für den gewichteten Mittelwert durchgeführt werden, wird nun anhand von Fig. 3 erläutert.

Fig. 3 zeigt die Matrix mit den Punkten {1, 1} bis {n, m} und sieben Linien G1 bis G7. Die Matrix, die die Speicherplätze des Datensatzes MATRIX addressiert, ist hierbei als Raster dargestellt, wobei die Kreuzungspunkte des Rasters den Punkten {1, 1} bis {n, m} der Matrix entsprechen.

Die Linien G1 bis G7 setzen sich aus Verbindungslinien zwischen Punkten der Matrix zusammen.

Die Linien G1 bis G5 sind hierbei so gewählt, daß sie Geraden annähern und so Geraden entsprechen. Die Linien G1 und G2 entsprechen Geraden mit einer Steigung von 1/2 bzw. 2 durch den Punkt {1, 1}. Die Linie G4 entspricht einer Geraden mit einer Steigung von 1/2 durch den Punkt {n-8, m}. Die Linie G3 entspricht einer Geraden mit einer Steigung von 2 durch den Punkt {n, m}. Die Linie G5 entspricht einer Geraden, die die beiden Punkte {n-8, m} und {n, m} miteinander verbindet. Die Linien G6 und G7 gehen ebenso wie die Linien G1 und G2 durch den Punkt {1, 1}, haben jedoch eine größere bzw. eine kleinere mittlere Steigung als diese.

Die Vorschrift, wie die Linien G6 und G7 gebildet werden, wird erst im weiteren bei der Beschreibung der genauen Funktionsweise der Steuereinrichtung CONTR2 erläutert.

Die von diesen Linien verbundenen Punkte stellen Randpunkte dar, die einen Bereich der Matrix umgrenzen.

Die Linien G1 bis G5 umgrenzen hierbei einen vor Beginn der Berechnungen festgelegten Bereich, also den maximalen Bereich, in dem Berechnungen durchgeführt werden.

Die Linien G6 und G7 werden während der Berechnungen gebildet und schränken diesen maximalen Bereich so dynamisch noch weiter ein. Damit werden die Berechnungen nur für den von den Linien G3 bis G7 umgrenzten Bereich durchgeführt.

Es ist auch möglich, daß die Geraden, denen die Linien G4 und G5 entsprechen, nicht durch den Punkt {n-8, m} bzw. {n, m} gehen. Die Wahl dieser Punkte hängt von der Güte des Wort-Musters, insbesondere von der Güte der Start- und Endpunkterkennungseinrichtung in der Trenneinrichtung DIVIDE ab. Der Wert 8 wurde hierbei experimentell als brauchbarer Wert ermittelt, da das Wort-Ende meist etwas zu spät erkannt wird. Je später das Wort-Ende erkannt wird, umso weiter muß der Punkt {n-8, m} nach links verschoben werden. Die Gerade G4 hätte so beispielsweise durch den Punkt {n-10, m} zu gehen. Wird umgekehrt das Wort-Ende zu früh erkannt, so müßte der Punkt {n, m} nach rechts, also beispielsweise zum Punkt {n+2, m} verschoben werden.

Es ist weiter möglich, daß der durch die Linien G1 bis G5 vor Beginn der Berechnungen festgelegte Bereich eine andere Form hat.Insbesondere ist es möglich, daß dieser Bereich die Form eines Parallelogramms besitzt, sich also die Linien G3 und G4 im Punkt {n, m} treffen. Auch ein andere mittlere Steigung der Linien G1 bis G5 ist möglich.

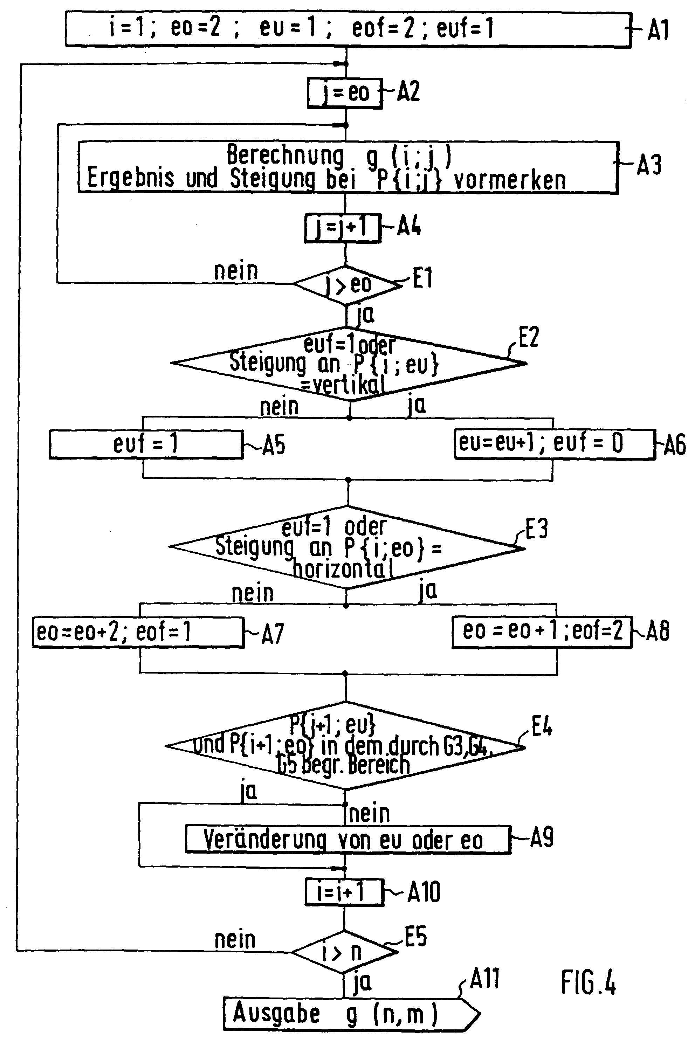

Im folgenden wird nun die genaue Funktionsweise der Steuereinrichtung CONTR2 anhand von Fig. 4 näher erläutert.

Fig. 4 zeigt ein Ablaufdiagramm, das die Funktionsweise der Steuereinrichtung CONTR2 beschreibt.

Es weist mehrere Entscheidungsglieder E1 bis E5, mehrere Schritte A1 bis A10 und mehrere Parameter i, j, eo, eu, eof, euf und n auf.

Die Parameter i und j sind Zählparameter, wobei i die aktuelle Spalte und j die aktuelle Zeile in der Matrix angibt. Die Parameter eo und eu enthalten die Werte für die Ober- bzw. Untergrenze der aktuellen Spalte der Matrix. Die Parameter eof und euf sind Hilfsparameter, die den Wert enthalten, um den die Ober- bzw. Untergrenze bei der nächsten Spalte verändert werden muß.

Im ersten Schritt werden die Parameter i, eo, eu, eof und euf auf die Startwerte 1, 2, 1, 2 bzw. 1 gesetzt. Im zweiten Schritt A2 wird der Parameter j auf den Wert des Parameters eo gesetzt. Im dritten Schritt A3 wird die Berechnungs-Einrichtung DPA angewiesen, für den Punkt {i, j} die Berechnungsvorschrift (2) durchzuführen und das Ergebnis und die Steigung bei diesem Punkt zu vermerken. Im vierten Schritt A4 wird der Wert des Parameters j um eins erhöht. Das Entscheidungsglied E1 überprüft sodann, ob der Wert des Parameters j größer als der des Parameters eu ist. Ist dies nicht der Fall, so führt er einen Rücksprung zum Schritt A3 durch. Trifft dies zu, so wird zum Entscheidungsglied E2 verzweigt. Durch die Funktionsweise der Schritte A2 bis A4 und des Entscheidungsglieds E1 wird so bewirkt, daß die Berechnungsvorschriften für alle Punkte der i-ten Spalte zwischen der durch den Wert der Parameter eo und eu festgelegten Ober- bzw. Untergrenze durchgeführt werden.

Das Entscheidungsglied E2 ermittelt, ob der Wert des Parameters euf gleich eins oder die Steigung am Punkt {i, eu} vertikal ist. Ist dies nicht der Fall, so verzweigt es zu dem Schritt A5 und ansonsten verzweigt es zu dem Schritt A6. Im Schritt A6 wird der Wert des Parameters euf auf eins gesetzt. In dem Schritt A6 wird der Wert des Parameters eu um eins erhöht und der Wert des Parameters euf auf Null gesetzt. Durch die Funktionsweise des Entscheidungsgliedes E2 und der Schritte A5 und A6 wird so erreicht, daß der Parameter eu, der die Untergrenze des Bereiches bestimmt, im Regelfall bei jedem zweiten Durchlauf um eins erhöht wird. Wenn die Steigung am Punkt {i, eu} vertikal ist, so wird diese Regel durchbrochen und die Untergrenze zusätzlich erhöht. Die die Untergrenze beschreibende Linie G6 hat somit im Regelfall eine mittlere Steigung von 1/2, kann jedoch bei Zutreffen der obigen Steigungsbedingung eine Steigung von eins erhalten.

Das Entscheidungsglied E3 ermittelt, ob der Wert des Parameters euf gleich eins ist oder die Steigung am Punkt {i, eo} horizontal ist. Trifft dies zu, so verzweigt es zu dem Schritt A8 und ansonsten zu dem Schritt A7. In dem Schritt A7 wird der Wert des Parameters eo um zwei erhöht und der Wert des Parameters eof auf eins gesetzt. In dem Schritt A8 wird der Wert des Parameters eo um eins erhöht und der Wert des Parameters eof auf zwei gesetzt. Durch die Funktionsweise des Entscheidungsgliedes E3 und der Schritte A7 und A8 wird erreicht, daß der Wert des Parameters eo, der die Obergrenze des Bereiches bestimmt, im Regelfall abwechselnd um den Wert 1 und den Wert 2 erhöht wird. Bei Zutreffen obiger Steigungsbedingung wird der Wert um eins erhöht. Damit hat die die Obergrenze beschreibende Linie G7 im Regelfall eine mittlere Steigung von 2, kann jedoch bei Zutreffen der obigen Steigungsbedingung eine Steigung von 1 erhalten.

Das Entscheidungsglied E4 ermittelt, ob sich der Punkt {i+1, eo}, also die Obergrenze der nächsten zu berechnenden Spalte, noch in dem von den Linien G4 und G5 (siehe auch Fig. 3) begrenzten Bereich befindet. Wie bereits oben erwähnt, sind diese Linien bereits vor der Durchführung der Berechnungen festgelegt. Ist dies der Fall, so wird zum Schritt A10 verzweigt, ansonsten zum Schritt A9. Desweiteren ermittelt das Entscheidungsglied E4, ob der Punkt {i+1, eu} in dem von der Gerade G3 begrenzten Bereich liegt. Trifft dies zu, so verzweigt er zum Schritt A10 und ansonsten zum Schritt A9. Im Schritt A9 wird der Wert des Parameters eu oder eo entsprechend verändert, sodaß der Punkt der Ober- bzw. Untergrenze direkt auf dem entsprechenden durch die Geraden G3 bis G5 bestimmten Randpunkt liegt. Durch das Entscheidungsglied E4 und den Schritt A9 wird so erreicht, das die Berechnungen nur für den durch die Geraden G3 bis G5 begrenzten Bereich durchgeführt werden.

Im Schritt A10 wird der Parameter i um den Wert eins erhöht. Das Entscheidungsglied E5 ermittelt sodann, ob der Wert des Parameters i größer als der des Parameters n ist. Ist dies der Fall, so wird zum Schritt A11 und ansonsten zum Schritt A2 verzweigt. Durch die Funktionsweise des Schrittes A10 und des Entscheidungsgliedes E5 wird erreicht, das der obige Ablauf für alle Spalten der Matrix bis zur n-ten Spalte durchgeführt wird.

Im Schritt A11 wird der Wert des mittleren nomierten Abstandes am Punkt {n, m} an die Steuereinrichtung CONTR1 gesendet. Dieser Wert entspricht dem mittleren normierten Abstand zwischen dem Referenzmuster und dem Wort-Muster.

Es ist auch möglich, daß die erfindungsgemäße Spracherkennungseinrichtung aus einem Computer mit entsprechenden peripheren Einrichtungen besteht. Dieser Computer würde von mehreren Programm-Modulen gesteuert, die jeweils einen einer Programmier-Sprache entsprechenden Satz von Steuerbefehlen enthalten. Bei ihrer Ausführung durch den Computer würden die Programm-Module die Spracherkennungseinrichtung dann entsprechend der obigen Funktionsbeschreibungen steuern.

**EP 0 703 567 B1**

**Patentansprüche**

1. Verfahren zur Bestimmung eines Maßes der Übereinstimmung zwischen einem ersten und einem zweiten Muster, bei dem das erste und das zweite Muster auf eine Vielzahl von n ersten (V11 bis V1n) bzw. eine Vielzahl von m zweiten Merkmalsvektoren (V21 bis V2m) abgebildet werden, wobei durch die n ersten (V11 bis V1n) und m zweiten Merkmalsvektoren (V21 bis V2m) eine Matrix mit n x m Punkten ({1, 1} bis {n, m}) aufgespannt wird, bei dem für Punkte ({1, 1} bis {n, m}) in einem Teilbereich der Matrix der Abstand des jeweiligen ersten (V11 bis V1n) und zweiten Merkmalsvektors (V21 bis V2m) sowie mittels eines DP-Algorithmus aus den Abständen der mittlere Abstand entlang eines optimalen Weges berechnet wird und bei dem der mittlere Abstand in mindestens einem Punkt ({n, m}) als Maß für die Übereinstimmung gewertet wird, **dadurch gekennzeichnet,** daß für Randpunkte des Teilbereiches während der Berechnung Daten über die Steigung des jeweiligen optimalen Weges ermittelt werden und daß aufgrund dieser Daten der Teilbereich für die weitere Berechnung dynamisch verkleinert wird.

2. Verfahren nach Anspruch 1, dadurch gekennzeichnet, daß als Daten über die Steigung Informationen darüber verwendet werden, ob der optimale Weg zuletzt diagonal, vertikal oder horizontal verlaufen ist und daß der Teilbereich für die weitere Berechnung dynamisch verkleinert wird, wenn der optimale Weg zu einem Randpunkt zuletzt nicht diagonal verlaufen ist.

3. Verfahren nach Anspruch 1, dadurch gekennzeichnet, daß als Daten über die Steigung die mittlere Steigung des jeweiligen optimalen Weges verwendet wird und daß der Teilbereich für die weitere Berechnung dynamisch verkleinert wird, wenn die für einen Randpunkt der Ober- oder Untergrenze des Teilbereiches ermittelte mittlere Steigung eine vorher festgelegte erste Steigung überschreitet bzw. eine vorher festgelegte zweite Steigung unterschreitet.

4. Verfahren nach Anspruch 1, dadurch gekennzeichnet, daß für alle Punkte ({1, 1} bis {n, m}) in dem Teilbereich während der Berechnung Daten über die Steigung des jeweiligen optimalen Weges ermittelt und bei dem jeweiligen Punkt ({1, 1} bis {n, m}) abgespeichert werden.

5. Verfahren nach Anspruch 4, dadurch gekennzeichnet, daß der DP-Algorithmus vom Punkt {1, 1} beginnend spaltenweise durchgeführt wird und die bei Punkten ({1, 1} bis {n, m}) der vorherigen Spalte abgespeicherten Daten für die Entscheidung über den optimalen Weg herangezogen werden.

6. Verfahren nach Anspruch 1, dadurch gekennzeichnet, daß der Teilbereich zu Beginn der Berechnung so festgelegt wird, daß er entsprechend einer ersten (G1) und einer zweiten Gerade (G2) in der Matrix durch einen Punkt {1, 1} mit einer Steigung von 1/2 bzw. 2 begrenzt wird.

7. Verfahren nach Anspruch 1, dadurch gekennzeichnet, daß der Teilbereich zu Beginn der Berechnung so festgelegt wird, daß er entsprechend einer dritten und einer vierten Gerade in der Matrix durch einen Punkt {n, m} mit einer Steigung von 1/2 bzw. 2 begrenzt wird.

8. Verfahren nach Anspruch 1, dadurch gekennzeichnet, daß der Teilbereich zu Beginn der Berechnung so festgelegt wird, daß er entsprechend einer dritten Gerade (G3) in der Matrix durch einen Punkt {n-w, m} mit einer Steigung von 1/2, einer vierten Gerade (G4) in der Matrix durch einen Punkt {n, m} mit einer Steigung von 2 und einer fünften, waagrechten Gerade (G5) durch die Punkte {n-w, m} und {n, m} begrenzt wird.

9. Verfahren nach Anspruch 8, dadurch gekennzeichnet, daß das erste Muster ein unbekanntes Einzelwort und das zweite Muster ein Referenzwort darstellt und daß w von der Güte der Einzelwortzerlegung abhängt.

10. Einrichtung (COMP) zur Bestimmung eines Maßes der Übereinstimmung zwischen einem ersten und einem zweiten Muster, die durch n erste (V11 bis V1n) bzw. m zweite Merkmalsvektoren (V21 bis V2m) beschrieben sind, mit einer Steuereinrichtung (CONTR2), mit einer Speichereinrichtung (MEM2) zum Abspeichern der n ersten (V11 bis V1n) und m zweiten Merkmalsvektoren (V21 bis V2m) sowie von den Punkten ({1, 1} bis {n, m}) einer Matrix zugeordneten Daten, wobei die Matrix von den n ersten (V11 bis V1n) und m zweiten Merkmalsvektoren (V21 bis V2m) aufgespannt wird, mit einer ersten Berechnungseinrichtung (DIST) zur Berechnung von Abständen zwischen in der Speichereinrichtung (MEM2) abgelegten ersten (V11 bis V1n) und zweiten Merkmalsvektoren (V21 bis V2m) und mit einer zweiten Berechnungseinrichtung (DPA), die so ausgestaltet ist, daß sie für Punkte ({1, 1} bis {n, m}) in einem von der Steuereinrichtung (CONTR2) bestimmten Teilbereich der Matrix mittels eines DP-Algorithmus aus den Abständen einen mittleren Abstand entlang eines optimalen Weges berechnet, **dadurch gekennzeichnet,**

7

daß die zweite Berechnungseinrichtung (DPA) so ausgestaltet ist, daß sie während der Berechnung der mittleren Abstände für Randpunkte des Teilbereiches Daten über die Steigung des jeweiligen optimalen Weges ermittelt, und daß die Steuereinrichtung (CONTR2) so ausgestaltet ist, daß sie aufgrund dieser Daten den Teilbereich für die weitere Berechnung dynamisch verkleinert.

11. Spracherkennungseinrichtung mit einer Eingabeeinrichtung (INPUT) zum Empfang eines Sprachsignals, mit einer Konvertereinrichtung (KONV) zur Abbildung des Sprachsignals auf n erste Merkmalsvektoren (V11 bis V1n), mit einer Speichereinrichtung (MEM1) für mindestens ein Referenzmuster, das durch m zweite Merkmalsvektoren (V21 bis V2m) beschrieben ist, und mit einer Mustererkennungseinrichtung, die mit einer ersten (CONTR1) und einer zweiten Steuereinrichtung (CONTR2), einer ersten (DIST) und einer zweiten Berechnungseinrichtung (DPA) und mit einer Speichereinrichtung (MEM2) versehen ist, die zum Abspeichern der n ersten (V11 bis V1n) und m zweiten Merkmalsvektoren (V21 bis V2m) sowie von den Punkten ({1, 1} bis {n, m}) einer Matrix zugeordneten Daten dient, wobei die Matrix von den n ersten (V11 bis V1n) und m zweiten Merkmalsvektoren (V21 bis V2m) aufgespannt wird, die erste Berechnungseinrichtung (DIST) zur Berechnung von Abständen zwischen in der Speichereinrichtung (MEM2) abgelegten ersten (V11 bis V1n) und zweiten Merkmalsvektoren (V21 bis V2m) dient, die zweite Berechnungseinrichtung (DPA) so ausgestaltet ist, daß sie für Punkte ({1, 1} bis {n, m}) in einem von der zweiten Steuereinrichtung (CONTR2) bestimmten Teilbereich der Matrix mittels eines DP-Algorithmus aus den Abständen einen mittleren Abstand entlang eines optimalen Weges berechnet und die erste Steuereinrichtung (CONTR1) so ausgestaltet ist, daß sie mittels des mittleren Abstandes in mindestens einem Punkt ({n, m}) über das Erkennen des Sprachsignals entscheidet, **dadurch gekennzeichnet,** daß die zweite Berechnungseinrichtung (DPA) so ausgestaltet ist, daß sie während der Berechnung der mittleren Abstände für Randpunkte des Teilbereiches Daten über die Steigung des jeweiligen optimalen Weges ermittelt, und daß die Steuereinrichtung (CONTR2) so ausgestaltet ist, daß sie aufgrund dieser Daten den Teilbereich für die weitere Berechnung dynamisch verkleinert.

12. Programm-Modul zur Bestimmung eines Maßes der Übereinstimmung zwischen einem ersten und einem zweiten Muster, die durch n erste (V11 bis V1n) bzw. m zweite Merkmalsvektoren (V21 bis V2m) beschrieben sind, wobei das Programm-Modul einen Satz von Steuerbefehlen enthält, der so strukturiert ist, daß er bei seiner Ausführung in einer Einrichtung den Ablauf in der Einrichtung derart steuert, daß für Punkte ({1, 1} bis {n, m}) in einem Teilbereich einer Matrix, die durch die n ersten (V11 bis V1n) und m zweiten Merkmalsvektoren (V21 bis V2m) aufgespannt wird, der Abstand des jeweiligen ersten (V11 bis V1n) und zweiten Merkmalsvektors (V21 bis V2m) sowie mittels eines DP-Algorithmus aus den Abständen der mittlere Abstand entlang eines optimalen Weges berechnet wird und daß der mittlere Abstand in mindestens einem Punkt ({n, m}) als Maß für die Übereinstimmung gewertet wird, **dadurch gekennzeichnet,** daß der Satz von Steuerbefehlen weiter so strukturiert ist, daß er bei seiner Ausführung in einer Einrichtung den Ablauf in der Einrichtung derart steuert, daß für Randpunkte des Teilbereiches während der Berechnung Daten über die Steigung des jeweiligen optimalen Weges ermittelt werden und aufgrund dieser Daten der Teilbereich für die weitere Berechnung dynamisch verkleinert wird.

## Claims

1. A process for determining a measure of the correspondence between a first and a second pattern, wherein the first and the second pattern are mapped onto a plurality of n first feature vectors (V11 to V1n) and a plurality of m second feature vectors (V21 to V2m) respectively, a matrix comprising n x m points ({1,1} to {n, m}) being formed by said n first feature vectors (V11 to V1n) and m second feature vectors (V21 to V2m), wherein for points ({1,1} to {n, m}) in a sub-area of the matrix, the distance between the respective first feature vector (V11 to V1n) and second feature vector (V21 to V2m) is calculated and, from the distances, the mean distance along an optimal path is calculated by means of a DP algorithm, and wherein the mean distance at at least one point ({n m}) is evaluated as measure of the correspondence, characterised in that for boundary points of the sub-area, data relating to the gradient of the respective optimal path are determined during the calculation, and that on the basis of these data the sub-area is dynamically reduced for the further calculation.

2. A process according to Claim 1, characterised in that information as to whether the optimal path was last diagonal, vertical or horizontal is used as data relating to the gradient, and that the sub-area is dynamically reduced for the further calculation if the optimal path to a boundary point was last not diagonal.

3. A process according to Claim 1, characterised in that the mean gradient of the respective optimal path is used as data relating to the mean gradient, and that the sub-area is dynamically reduced for the further calculation if the mean gradient, determined for a boundary point of the upper or lower boundary of the sub-area, is greater than a previously determined first gradient or is smaller than a previously determined second gradient.

4. A process according to Claim 1, characterised in that for all the points ($\{1,1\}$) to $\{n, m\}$) in the sub-area, data relating to the gradient of the respective optimal path are determined during the calculation and are stored at the respective point ($\{1,1\}$ to $\{n, m\}$).

5. A process according to Claim 4, characterised in that the DP algorithm is executed column-wise commencing from the point $\{1, 1\}$, and the data stored at points ($\{1,1\}$ to $\{n, m\}$) of the previous column are used for the decision on the optimal path.

6. A process according to Claim 1, characterised in that the sub-area is defined at the start of the calculation such that it is delimited in accordance with a first straight line (G1) and a second straight line (G2) in the matrix through a point $\{1, 1\}$ with a gradient of 1/2 and 2 respectively.

7. A process according to Claim 1, characterised in that the sub-area is defined at the start of the calculation such that it is delimited in accordance with a third and a fourth straight line in the matrix through a point $\{n, m\}$ with a gradient of 1/2 and 2 respectively.

8. A process according to Claim 1, characterised in that the sub-area is defined at the start of the calculation such that it is delimited in accordance with a third straight line (G3) in the matrix through a point $\{n-w, m\}$ with a gradient of 1/2, a fourth straight line (G4) in the matrix through a point $\{n, m\}$ with a gradient of 2, and a fifth, horizontal straight line (G5) through the points $\{n-w, m\}$ and $\{n, m\}$.

9. A process according to Claim 8, characterised in that the first pattern represents an unknown individual word and the second pattern represents a reference word and that w is a function of the quality of the individual word analysis.

10. A device (COMP) for determining a measure of the correspondence between a first and a second pattern which are described by n first feature vectors (V11 to V1n) and m second feature vectors (V21 to V2m) respectively, with a control device (CONTR2), with a storage device (MEM2) for storing the n first feature vectors (V11 to V1n) and m second feature vectors (V21 to V2m) and data assigned to the points ($\{1,1\}$ to $\{n,m\}$) of a matrix, said matrix being formed by the n first feature vectors (V11 to V1n) and m second feature vectors (V21 to V2m), with a first calculating device (DIST) for calculating distances between first feature vectors (V11 to V1n) and second feature vectors (V21 to V2m) stored in the storage device (MEM2), and with a second calculating device (DPA) which is designed such that, for points ($\{1,1\}$ to $\{n, m\}$) in a sub-area of the matrix determined by the control device (CONTR2), from the distances it calculates a mean distance along an optimal path using a DP algorithm, characterised in that the second calculating device (DPA) is designed such that during the calculation of the mean distances for boundary points of the sub-area, it determines data relating to the gradient of the respective optimal path, and that the control device (CONTR2) is designed such that on the basis of these data it dynamically reduces the sub-area for the further calculation.

11. A speech recognition device comprising an input device (INPUT) for receiving a speech signal, a converter device (KONV) for mapping the speech signal onto n first feature vectors (V11 to V1n), a storage device (MEM1) for at least one reference pattern described by m second feature vectors (V21 to V2m), and a pattern recognition device which is provided with a first control device (CONTR1) and a second control device (CONTR2), a first calculating device (DIST) and a second calculating device (DPA), and a storage device (MEM2) which serves to store the n first feature vectors (V11 to V1n) and m second feature vectors (V21 to V2m) and data assigned to the points ($\{1,1\}$) to $\{n, m\}$ of a matrix, wherein the matrix is formed by the n first feature vectors (V11 to V1n) and m second feature vectors (V21 to V2m), the first calculating device (DIST) serves to calculate distances between first feature vectors (V11 to V1n) and second feature vectors (V21 to V2m) stored in the storage device (MEM2), the second calculating device (DPA) is designed such that for points ($\{1,1\}$ to $\{n, m\}$) in a sub-area of the matrix determined by the second control device (CONTR2), from the distances it calculates a mean distance along an optimal path using a DP algorithm, and the first control device (CONTR1) is designed such that by means of the mean distance at at least one point ($\{n, m\}$) it decides on the recognition of the speech signal, characterised in that the second calculating device (DPA) is designed such that during the calculation of the mean distances for boundary points of the sub-area it determines data relating to the gradient of the respective optimal path, and that the control device (CONTR2) is designed such that on the basis of these data it dynamically reduces the sub-area for the further calculation.

12. A program module for determining a measure of the correspondence between a first and a second pattern which are described by n first feature vectors (V11 to V1n) and m second feature vectors (V21 to V2m) respectively, wherein the program module contains a set of control commands which is structured such that upon its execution in a device, it controls the sequence of operations in the device such that for points ({1, 1} to {n, m}) in a sub-area of a matrix formed by the n first feature vectors (V11 to V1n) and m second feature vectors (V21 to V2m), the distance between the respective first feature vector (V11 to V1n) and second feature vector (V21 to V2m) is calculated and, from the distances, the mean distance along an optimal path is calculated by means of a DP algorithm, and that the mean distance at at least one point ({n, m}) is evaluated as measure of the correspondence, characterised in that the set of control commands is further structured such that upon its execution in a device, it controls the sequence of operations in the device such that, for boundary points of the sub-area, data relating to the gradient of the respective optimal path are determined during the calculation and on the basis of these data the sub-area is dynamically reduced for the further calculation.

**Revendications**

1. Procédé de détermination du degré de concordance d'une première et d'une seconde structure, dans lequel la première structure et la seconde structure sont représentées selon de multiples n premiers vecteurs de caractéristiques (V11 à V1n) et de multiples m seconds vecteurs de caractéristiques (V21 à V2m) grâce à quoi une matrice avec n x m points ({1, 1} jusqu'à {n, m}) est déterminée par les n premiers vecteurs (V11 à V1n) et les m seconds vecteurs de caractéristiques (V21 à V2m), dans lequel, pour des points ({1, 1} à {n, m}), dans une zone partielle de la matrice, la distance du premier vecteur (V11 à V1n) et du second vecteur de caractéristiques (V21 à V2m) est calculée, dans lequel, au moyen d'un algorithme DP, la distance moyenne est calculée, à partir des distances, le long d'une trajectoire optimale et dans lequel la distance moyenne est évaluée en au moins un point ({n, m}) comme degré de concordance, caractérisé en ce que, pour des points marginaux de la zone partielle, pendant le calcul, des données sur la montée de la trajectoire optimale respective sont déterminées et en ce que, sur la base de ces données, la zone partielle est réduite de façon dynamique pour le calcul ultérieur.

2. Procédé selon la revendication 1, caractérisé en ce que, comme données sur la montée, on utilise des informations permettant de savoir si la trajectoire optimale est en dernier lieu diagonale, verticale ou horizontale et en ce que la zone partielle est réduite de façon dynamique pour le calcul ultérieur si la trajectoire optimale vers un point marginal ne passe pas en dernier lieu en diagonale.

3. Procédé selon la revendication 1, caractérisé en ce que, comme données sur la montée, on utilise la montée moyenne de la trajectoire optimale respective et en ce que la zone partielle est réduite de façon dynamique pour le calcul ultérieur si la montée moyenne déterminée pour un point marginal de la limite supérieure ou inférieure de la zone partielle dépasse une première montée définie au préalable ou reste en-deçà d'une seconde montée définie au préalable.

4. Procédé selon la revendication 1, caractérisé en ce que, pour tous les points ({1, 1} à {n, m}) dans la zone partielle pendant le calcul, des données sur la montée de la trajectoire optimale respective sont déterminées et mémorisées pour le point respectif ({1, 1} à {n, m}).

5. Procédé selon la revendication 4, caractérisé en ce que l'algorithme DP est exécuté par colonne en commençant par le point {1, 1} et que les données mémorisées pour les points ({1, 1} à {n, m}) de la colonne précédente sont appelées pour la décision à prendre sur la trajectoire optimale.

6. Procédé selon la revendication 1, caractérisé en ce que la zone partielle est définie au début du calcul de telle sorte que, conformément à une première droite (G1) et à une seconde droite (G2) dans la matrice, elle est limitée par un point {1, 1} avec une montée de 1/2 ou 2.

7. Procédé selon la revendication 1, caractérisé en ce que la zone partielle est définie au début du calcul de telle sorte que, conformément à une troisième et une quatrième droite dans la matrice, elle est limitée par un point {1, 1} avec une montée de 1/2 ou 2.

8. Procédé selon la revendication 1, caractérisé en ce que la zone partielle est définie au début du calcul de telle

**EP 0 703 567 B1**

sorte que, conformément à une troisième droite (G3) dans la matrice, elle est limitée par un point {n-w, m} avec une montée de 1/2, conformément à une quatrième droite (G4) dans la matrice, elle est limitée par un point {n, m} avec une montée de 2 et, selon une cinquième droite (G5) horizontale, par les points {n-w, m} et {n, m}.

9. Procédé selon la revendication 8, caractérisé en ce que la première structure représente un mot isolé inconnu et la seconde structure un mot de référence et en ce que w dépend de la qualité de la décomposition en mots isolés.

10. Dispositif (COMP) de détermination d'un degré de concordance entre une première structure et une seconde structure qui sont décrites par n premiers vecteurs de caractéristiques (V11 à V1n) respectivement m seconds vecteurs de caractéristiques (V21 à V2m), avec un dispositif de commande (CONTR2), un dispositif de mémoire (MEM2) pour mémoriser les n premiers vecteurs de caractéristiques (V11 à V1n) et m seconds vecteurs de caractéristiques (V21 à V2m) ainsi que des données affectées à une matrice par les points {1, 1} à {n, m}, la matrice étant déterminée par les n premiers vecteurs de caractéristiques (V11 à V1n) et m seconds vecteurs de caractéristiques (V21 à V2m), avec un premier dispositif de calcul (DIST) pour le calcul de distances entre les premiers vecteurs (V11 à V1n) et seconds vecteurs de caractéristiques (V21 à V2m) déposés dans le dispositif de mémoire (MEM2) et avec un second dispositif de calcul (DPA) qui est conçu de telle sorte que, pour des points ({1, 1} à {n, m}) dans une zone partielle de la matrice déterminée par le dispositif de commande (CONTR2), il calcule, à partir des distances, une distance moyenne le long d'une trajectoire optimale, au moyen d'un algorithme DP, caractérisé en ce que le second dispositif de calcul (DPA) est conçu de telle sorte que, pendant le calcul des distances moyennes pour des points marginaux de la zone partielle, il détermine des données sur la montée de la trajectoire optimale respective et en ce que le dispositif de commande (CONTR2) est conçu de telle sorte que, sur la base de ces données, il réduit de façon dynamique la zone partielle pour le calcul ultérieur.

11. Dispositif de reconnaissance de la parole comportant un dispositif d'entrée (INPUT) pour la réception d'un signal de parole, un dispositif de conversion (KONV) pour la reproduction du signal de parole sur n premiers vecteurs de caractéristiques (V11 à V1n), avec un dispositif de mémoire (MEM1) pour au moins une structure de référence qui est décrite par m seconds vecteurs de caractéristiques (V21 à V2m), et un dispositif de reconnaissance de structures qui est doté d'un premier dispositif de commande (CONTR1) et d'un second dispositif de commande (CONTR2), d'un premier dispositif de calcul (DIST) et d'un second dispositif de calcul (DPA) et d'un dispositif de mémoire (MEM2) qui sert à mémoriser les n premiers vecteurs de caractéristiques (V11 à V1n) et m seconds vecteurs de caractéristiques (V21 à V2m) ainsi que des données affectées à une matrice par les points ({1, 1} à {n, m}), la matrice étant déterminée par les n premiers vecteurs de caractéristiques (V11 à V1n) et m seconds vecteurs de caractéristiques (V21 à V2m), le premier dispositif de calcul (DIST) servant au calcul de distances entre les premiers vecteurs (V11 à V1n) et seconds vecteurs de caractéristiques (V21 à V2m) déposés dans le dispositif de mémoire (MEM2), le second dispositif de calcul (DPA) étant conçu de telle sorte que, pour des points ({1, 1} à {n, m}) dans une zone partielle de la matrice déterminée par le second dispositif de commande (CONTR2), il calcule, à partir des distances, une distance moyenne le long d'une trajectoire optimale, au moyen d'un algorithme DP et le premier dispositif de commande (CONTR1) étant conçu de telle sorte qu'il décide de la reconnaissance du signal de parole au moyen de la distance moyenne en au moins un point ({n, m}), caractérisé en ce que le second dispositif de calcul (DPA) est conçu de telle sorte que, pendant le calcul des distances moyennes pour des points marginaux de la zone partielle, il détermine des données sur la montée de la trajectoire optimale respective et en ce que le dispositif de commande (CONTR2) est conçu de telle sorte que, sur la base de ces données, il réduit de façon dynamique la zone partielle pour le calcul ultérieur.

12. Module de programme de détermination du degré de concordance d'une première et d'une seconde structure qui sont décrites par n premiers vecteurs de caractéristiques (V11 à V1n) et m seconds vecteurs de caractéristiques (V21 à V2m), le module de programme comportant un groupe d'instructions de commande qui est structuré de telle sorte que, lors de son exécution dans un dispositif, il commande le déroulement dans le dispositif de telle façon que, pour des points ({1, 1} à {n, m}) dans une zone partielle d'une matrice qui est déterminée par les n premiers vecteurs de caractéristiques (V11 à V1n) et m seconds vecteurs de caractéristiques (V21 à V2m), la distance respectivement du premier vecteur (V11 à Vin) et du second vecteur de caractéristiques (V21 à V2m) est calculée, qu'au moyen d'un algorithme DP, à partir des distances, la distance moyenne est calculée le long d'une trajectoire optimale et que la distance moyenne est évaluée en au moins un point ({n, m}) comme degré de concordance, caractérisé en ce que le groupe d'instructions de commandes est en outre structuré de telle sorte que, lors de son exécution dans un dispositif, il commande le déroulement dans le dispositif de telle façon que, pour des points marginaux de la zone partielle, pendant le calcul, des données sont déterminées sur la montée de la trajectoire optimale respective et que, sur la base de ces données, la zone partielle est réduite de façon dynamique pour le calcul ultérieur.

FIG.1

FIG.2

EP 0 703 567 B1

FIG.3

P {1;m}  P {n-8;m}  G5  P {n;m}

G4

G3

G7

G2

G6

G1

P {1;1}  P {n;1}

EP 0 703 567 B1

i = 1 ; eo = 2 ; eu = 1 ; eof = 2 ; euf = 1 — A1

j = eo — A2

Berechnung  g (i ; j )
Ergebnis und Steigung bei  P{i ;j} vormerken — A3

j = j+1 — A4

nein ← j > eo — E1

ja

euf=1oder
Steigung an  P{i ; eu}
=vertikal — E2

nein                    ja

euf = 1 — A5          eu=eu+1; euf = 0 — A6

euf=1 oder
Steigung  an  P{i ; eo} =
horizontal — E3

nein                    ja

eo=eo+2; eof=1 — A7          eo = eo + 1 ; eof=2 — A8

P{i+1; eu}
und P{i+1; eo} in dem durch G3,G4,
G5 begr. Bereich — E4

ja                    nein

Veränderung von eu oder eo — A9

i=i+1 — A10

nein ← i > n — E5

ja — A11

Ausgabe  g (n,m )

FIG.4

15